# DEMANDE DE BREVET EUROPEEN

(11) **EP 1 297 875 A1**
(43) Date de publication de la demande: **02.04.2003**
(21) Numéro de dépôt: 01870203.5
(22) Date de dépôt: 27.09.2001
(51) Int. Cl.: B01D 19/00, F16N 39/00

(54) **Desaerateur statique a niveau constant**

(71) Demandeur: Techspace Aero S.A., 4041 Herstal (BE)
(72) Inventeur: Cornet, Albert, 4800 Verviers (BE)
(74) Mandataire: Van Malderen, Joelle

(57) **Abrégé**

La présente invention se rapporte à un désaérateur statique pour la séparation d'un mélange gaz-liquide, en particulier air-huile, dans lequel le gaz obtenu ainsi par séparation est rejeté à l'atmosphère, comprenant une cuve (1), de préférence cylindrique, reliée au niveau de sa partie supérieure à une conduite (2) d'évacuation dudit gaz à l'atmosphère et tangentiellement au niveau de sa paroi latérale à une conduite (3) d'arrivée dudit mélange gaz-liquide et à une conduite (4) d'évacuation de liquide pur obtenu par séparation, caractérisé en ce que ledit désaérateur comprend en outre un flotteur (6) disposé à la surface de séparation gaz-liquide (5), ledit flotteur étant relié à un restricteur (7) variable du côté de la sortie de gaz (2).

## Description

### Objet de l'invention

La présente invention se rapporte à un nouveau désaérateur statique permettant d'une part la séparation d'un mélange gaz-liquide et d'autre part le rejet à l'atmosphère du gaz séparé.

Le domaine d'application de l'invention est plus particulièrement celui des circuits de lubrification de turboréacteurs ou de moteurs thermiques à carter sec.

### Arrière-plan technologique et état de la technique

Dans les circuits de lubrification du type "à carter sec" tels qu'utilisés pour certains moteurs thermiques se caractérisant par un haut rendement, par exemple dans l'industrie automobile, ou encore dans les moteurs aéronautiques, l'huile est récoltée au(x) point(s) bas du moteur par une ou plusieurs pompes de récupération et renvoyée par celles-ci vers un réservoir.

Pour assurer une vidange totale du moteur en toutes circonstances, ces pompes ont une capacité nettement supérieure au débit d'huile injecté dans le moteur et, en conséquence, aspirent une quantité d'air importante en plus de l'huile récoltée. C'est ce mélange air-huile ainsi récolté qui est envoyé dans le réservoir.

Afin d'assurer la présence d'une qualité suffisante d'huile dans le réservoir et éviter d'y créer une émulsion, il est souvent indispensable d'adjoindre, en entrée de ce réservoir, un dispositif désaérateur rejetant à l'atmosphère l'air précédemment mélangé à l'huile et ne laissant entrer dans le réservoir qu'une huile débarrassée autant que possible des bulles d'air qu'elle contient.

Un dispositif désaérateur parmi les plus utilisés est constitué d'une cavité cylindrique à l'intérieur de laquelle le mélange air-huile est introduit tangentiellement, de façon à induire à l'intérieur de cette cavité un mouvement de rotation grâce auquel l'huile s'accumule le long des parois et essentiellement dans la partie basse de la cavité, tandis que l'air demeure au centre, essentiellement dans la partie haute de la cavité.

Un orifice supérieur de sortie d'air est aménagé au centre du dispositif, de manière à récolter l'air accumulé ainsi dans la partie centrale, tandis que l'huile est évacuée par un ou plusieurs orifices dans la paroi latérale du système.

Dans la plupart des cas, l'huile est injectée au sommet du dispositif et évacuée par le bas, mais dans certaines formes d'exécution, elle est introduite au bas du dispositif et le quitte en son sommet.

Dans tous les cas, il se forme une surface de séparation, entre l'air situé au centre, et l'huile pure, ou en cours de séparation s'accumulant en périphérie et dans le bas de la cuve.

Il est évidemment important que le dispositif soit dimensionné et alimenté de sorte que le niveau d'huile n'atteigne jamais l'orifice supérieur de sortie d'air, et inversement, que le niveau d'huile accumulé reste suffisant pour maintenir le mélange suffisamment longtemps dans le dispositif pour réaliser une séparation efficace.

Ce type de désaérateur possède l'avantage de n'avoir aucune pièce mobile et de ne demander aucune prise de mouvement ou d'énergie.

### Approche problème - solution

Le problème que se propose de résoudre la présente invention est le suivant.

Dans les circuits de lubrification classiques de moteurs, lorsqu'un désaérateur de type statique, tel que ceux décrits ci-dessus est utilisé, il est placé juste en amont du réservoir d'huile dont il constitue d'ailleurs souvent un accessoire intégré. La sortie d'huile débouche directement dans le réservoir, et la sortie d'air est raccordée au système d'aération du réservoir.

Cela signifie que si l'on désire placer un échangeur de chaleur, un filtre ou tout autre accessoire entre la pompe de récupération et le réservoir, ces accessoires sont traversés par le mélange air-huile provenant des pompes de récupération, et non par de l'huile pure. Ces échangeurs sont donc plus encombrants, et souvent moins efficaces que s'ils étaient dimensionnés uniquement en fonction du débit d'huile pure.

Il serait donc intéressant de placer le désaérateur à la sortie de la pompe, et donc en amont de ces accessoires, de sorte que ces derniers ne soient plus alimentés qu'en huile pure.

Cependant, les désaérateurs statiques décrits précédemment et utilisés actuellement ne peuvent pas être placés en amont d'une résistance hydraulique côté huile. Il est en effet essentiel que leurs deux sorties restent à la même pression indépendamment du débit. Si la sortie côté air est à l'atmosphère, la présence d'une résistance à la sortie côté huile mettra cette dernière en surpression permanente, ce qui entraînera la montée de la surface libre dans le désaérateur, et fera passer de l'huile par la sortie côté air.

La solution consistant à placer une restriction fixe sur la sortie côté air n'est efficace que pour un ratio air-huile déterminé. En effet si le débit d'air à séparer augmente, l'air sera en surpression et tendra à faire baisser de niveau de la surface libre, et par suite à vider le désaérateur. Si par contre le débit d'air diminue, la sortie à l'air sera à une pression inférieure à celle de la sortie d'huile, et c'est l'huile qui sortira par la sortie prévue pour l'évacuation de l'air. Toute variation du débit d'huile entraînerait des conséquences similaires.

### Buts de l'invention

La présente invention vise à s'affranchir des problèmes connus dans l'état de la technique et qui ont été exposés ci-dessus.

La présente invention vise à fournir un concept original de désaérateur statique, pouvant être disposé en amont d'équipements générateurs de résistance hydraulique.

### Principaux éléments caractéristiques de l'invention

La présente invention se rapporte à un désaérateur statique pour la séparation d'un mélange gaz-liquide et dans lequel le gaz obtenu par séparation est rejeté à l'atmosphère. En particulier, l'invention concerne un désaérateur statique pour la séparation d'un mélange air-huile récolté par au moins une pompe de récupération dans un circuit de lubrification d'un moteur tel qu'une turbomachine ou un moteur thermique à carter sec.

Selon l'invention, le désaérateur, comprenant une cuve, de préférence cylindrique, reliée au niveau de sa partie supérieure à une conduite d'évacuation dudit gaz à l'atmosphère et tangentiellement au niveau de sa paroi latérale à une conduite d'arrivée dudit mélange gaz-liquide et à une conduite d'évacuation de liquide pur obtenu par séparation, est caractérisé en ce qu'il comprend en outre un flotteur disposé à la surface de séparation gaz-liquide. Ce flotteur est relié à un restricteur variable du côté de la sortie de gaz, en vue de stabiliser et réguler le niveau de liquide contenu dans le fond de la cuve, indépendamment des débits de fluide, du rapport des pressions gaz/liquide dans la cuve et la résistance hydrauliques d'accessoires en aval du désaérateur dans le circuit de lubrification.

Avantageusement, le restricteur comprend un pointeau en obturation totale ou partielle de la conduite d'évacuation de gaz.

Selon une première forme d'exécution de l'invention, la conduite d'arrivée du mélange gaz-liquide est connectée tangentiellement à la cuve dans sa partie latérale supérieure et la conduite d'évacuation de liquide pur après séparation est connectée à la cuve dans sa partie latérale inférieure.

Selon une deuxième forme d'exécution de l'invention, la conduite d'arrivée du mélange gaz-liquide est connectée tangentiellement à la cuve dans sa partie latérale inférieure et la conduite d'évacuation de liquide pur après séparation est connectée à la cuve dans sa partie latérale supérieure.

La présente invention a également pour objet de proposer un procédé de séparation d'un mélange air-huile récolté par au moins une pompe de récupération dans un circuit de lubrification d'un moteur, l'air obtenu ainsi par séparation étant rejeté à l'atmosphère, mettant en oeuvre un désaérateur statique comprenant une cuve, de préférence cylindrique, reliée au niveau de sa partie supérieure à une conduite d'évacuation dudit air à l'atmosphère et tangentiellement au niveau de sa paroi latérale à une conduite d'arrivée dudit mélange air-huile et à une conduite d'évacuation d'huile pure obtenue par séparation, un flotteur disposé à la surface de séparation air-huile et relié à un restricteur variable du côté de la sortie d'air.

Lorsque le débit d'huile pure récoltée est constant et le débit d'air est variable, le procédé comprend les étapes suivantes :
- la pression de l'air augmentant, respectivement diminuant, dans la cuve, en amont du restricteur, le niveau de la surface libre de séparation air-huile baisse, respectivement monte ;
- par suite, le restricteur descend, respectivement monte ;
- la section de passage disponible pour l'évacuation d'air augmente, respectivement diminue, favorisant la diminution, respectivement l'augmentation, de pression d'air dans la cuve ;
- les pressions d'air et d'huile pure dans la cuve reviennent à l'équilibre, la surface libre de séparation air-huile remontant, respectivement descendant.

A l'inverse, lorsque le débit d'huile pure récoltée est variable et le débit d'air est constant, le procédé comprend les étapes suivantes :
- la pression de sortie d'huile pure augmentant, respectivement diminuant, dans la cuve, le niveau de la surface libre de séparation air-huile monte, respectivement baisse ;
- par suite, le restricteur monte, respectivement descend;
- la section de passage disponible pour l'évacuation d'air diminue, respectivement augmente, favorisant l'augmentation, respectivement la diminution, de pression d'air dans la cuve;
- les pressions d'air et d'huile pure dans la cuve reviennent à l'équilibre, la surface libre de séparation air-huile redescendant, respectivement remontant.

### Brève description des figures

Les figures 1.a et 1.b représentent une première forme d'exécution de désaérateur statique selon l'état de la technique.

Les figures 2.a et 2.b représentent une deuxième forme d'exécution de désaérateur statique selon l'état de la technique.

La figure 3 représente une forme d'exécution préférée de désaérateur statique selon la présente invention.

### Description détaillée de l'état de la technique

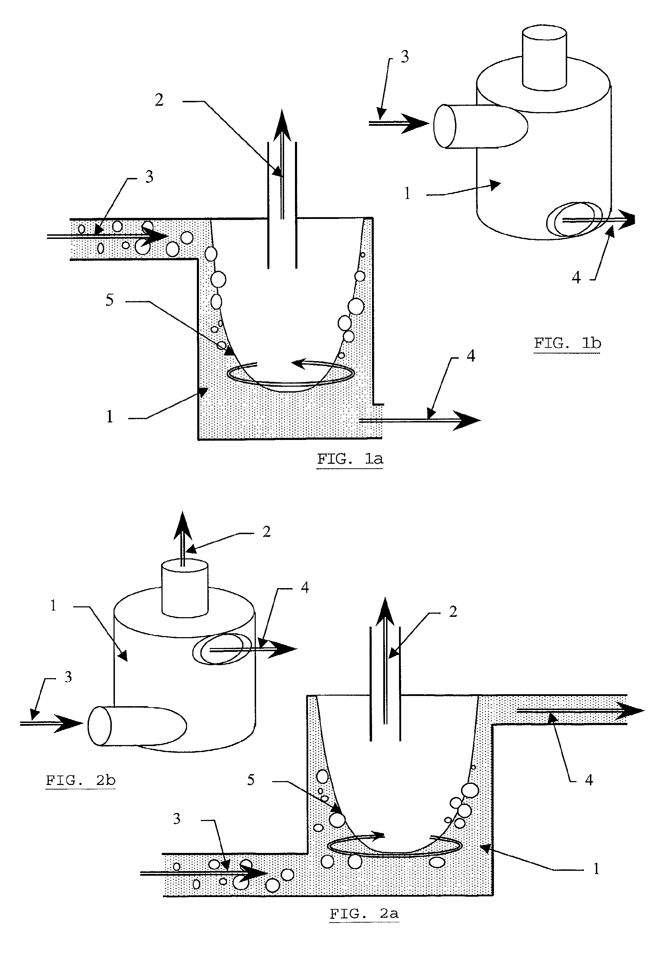

Les figures 1 et 2 représentent respectivement une première et une deuxième formes d'exécution particulières de désaérateur statique selon l'état de la technique.

Le désaérateur comprend une cuve essentiellement cylindrique 1 munie dans sa base supérieure d'un orifice connecté à une conduite de sortie d'air 2, de préférence situé au centre de ladite base.

Le mélange air-huile est injecté tangentiellement dans la cuve 1 par une conduite 3 connectée à un orifice de la cuve situé de préférence dans la paroi latérale, soit dans sa partie supérieure (figures 1), soit dans sa partie inférieure (figures 2).

Le mélange air-huile subit dans la cuve 1 un mouvement de rotation permettant la séparation de l'air et de l'huile. L'huile pure est ensuite évacuée par une conduite 4 connectée, en fonction de la position de la conduite d'entrée du mélange, à un orifice se trouvant respectivement dans la partie inférieure (figures 1) et dans la partie supérieure (figures 2) de la paroi latérale de la cuve.

### Description d'une forme d'exécution préférée de l'invention

L'invention consiste à introduire une restriction variable du côté de la sortie prévue pour l'évacuation de l'air 2 du désaérateur statique, de telle sorte que la pression de l'air dans le désaérateur s'adapte en permanence à la pression de l'huile pure à évacuer, quel que soit le débit d'air. Cette pression d'huile est fonction du débit en huile pure et de la résistance hydraulique en aval du désaérateur.

Cette restriction variable doit être continuellement adaptée aux débits en vigueur pour maintenir le niveau de la surface libre d'huile dans des limites acceptables. Pour ce faire, avantageusement, elle est directement commandée par les variations de ce niveau.

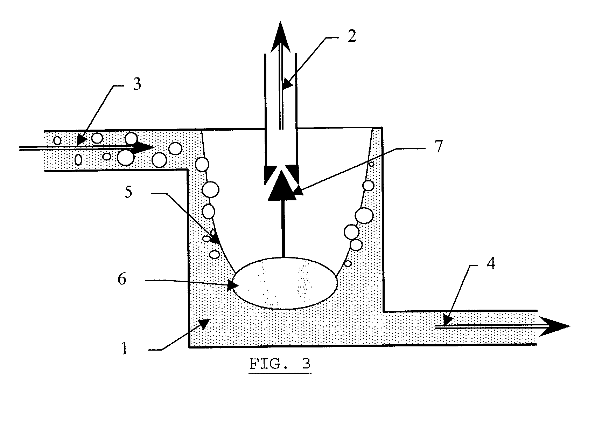

Selon une forme d'exécution particulièrement préférée de l'invention décrite à la figure 3, on place à l'intérieur du désaérateur un flotteur 6 porté par l'huile accumulée dans le fond de la cuve 1. Ce flotteur 6 est muni d'un pointeau 7 ou de tout autre dispositif créant une restriction à la sortie d'air 2.

Dans le cas ou un pointeau 7 est utilisé, il obture plus ou moins fortement la conduite d'évacuation de l'air 2 en fonction de la hauteur du flotteur 6 et, par conséquent, agit sur la pression de l'air à l'intérieur du désaérateur, et régule le niveau de la surface de séparation 5.

Le fonctionnement du désaérateur statique de l'invention est décrit ci-après selon le cas.

### Débit en huile pure constant, débit d'air variable

Supposons qu'initialement, il y ait équilibre entre la pression de l'air et la pression de l'huile pure en sortie de désaérateur, et que la valeur du ratio air-huile augmente soudainement, le débit d'huile restant constant. La pression de l'air en amont du restricteur, donc en amont du pointeau 7 qui obture la conduite 2, va augmenter. Le déséquilibre ainsi généré va par suite faire baisser le niveau de la surface libre 5, entraînant la descente du flotteur 6 avec son pointeau 7. La section de passage disponible pour évacuer l'air va s'accroître, ce qui favorisera l'évacuation de l'air excédentaire et conduira au retour à l'équilibre des pressions d'air et d'huile pure. Si le ratio air-huile reprend sa valeur initiale, la pression de l'air va diminuer et le niveau de la surface libre remontera. L'obturation du conduit d'évacuation d'air 2 par le pointeau 7 en découlant va permettre le retour à l'équilibre des pressions.

### Débit en huile pure variable, débit d'air constant

Supposons que le désaérateur, initialement en position d'équilibre, soit alimenté ensuite par un mélange air-huile plus riche en huile. La pression du côté de la sortie huile pure 4 va augmenter, ce qui va entraîner une hausse du niveau de la surface libre 5. Le pointeau 7 du flotteur 6 va réduire la section de passage destinée à évacuer l'air et la pression de l'air contenu dans le désaérateur va augmenter, jusqu'à atteindre un équilibre avec la pression en huile pure.

Inversement, en cas de diminution du débit d'huile pure, le niveau de la surface libre 5 baissera et l'augmentation de la section d'évacuation de l'air en résultant entraînera à nouveau le retour à l'équilibre des pressions.

## Revendications

1. Désaérateur statique pour la séparation d'un mélange gaz-liquide, en particulier air-huile, dans lequel le gaz obtenu ainsi par séparation est rejeté à l'atmosphère, comprenant une cuve (1), de préférence cylindrique, reliée au niveau de sa partie supérieure à une conduite (2) d'évacuation dudit gaz à l'atmosphère et tangentiellement au niveau de sa paroi latérale à une conduite (3) d'arrivée dudit mélange gaz-liquide et à une conduite (4) d'évacuation de liquide pur obtenu par séparation, **caractérisé en ce que** ledit désaérateur comprend en outre un flotteur (6) disposé à la surface de séparation gaz-liquide (5), ledit flotteur étant relié à un restricteur (7) variable du côté de la sortie de gaz (2).

2. Désaérateur selon la revendication 1,
**caractérisé en ce que** ledit restricteur (7) comprend un pointeau en obturation totale ou partielle de la conduite d'évacuation de gaz (2).

3. Désaérateur selon la revendication 1 ou 2, **caractérisé en ce que** la conduite d'arrivée du mélange gaz-liquide (3) est connectée tangentiellement à la cuve (1) dans sa partie latérale supérieure et la conduite d'évacuation de liquide pur (4) après séparation est connectée à la cuve (1) dans sa partie latérale inférieure.

4. Désaérateur selon la revendication 1 ou 2, **caractérisé en ce que** la conduite d'arrivée du mélange gaz-liquide (3) est connectée tangentiellement à la cuve (1) dans sa partie latérale inférieure et la conduite d'évacuation de liquide pur (4) après séparation est connectée à la cuve (1) dans sa partie latérale supérieure.

5. Procédé de séparation d'un mélange air-huile récolté par au moins une pompe de récupération dans un circuit de lubrification d'un moteur, l'air obtenu ainsi par séparation étant rejeté à l'atmosphère, mettant en oeuvre un désaérateur statique selon l'une quelconque des revendications 1 à 4, ledit désaérateur comprenant une cuve (1), de préférence cylindrique, reliée au niveau de sa partie supérieure à une conduite (2) d'évacuation dudit air à l'atmosphère et tangentiellement au niveau de sa paroi latérale à une conduite (3) d'arrivée dudit mélange air-huile et à une conduite (4) d'évacuation d'huile pure obtenue par séparation, un flotteur (6) disposé à la surface de séparation air-huile (5) et relié à un restricteur (7) variable du côté de la sortie d'air (2), **caractérisé par** les étapes suivantes, en cas de débit constant d'huile pure récoltée et de débit variable d'air :
- la pression de l'air augmentant, respectivement diminuant, dans la cuve (1), en amont du restricteur (7), le niveau de la surface libre (5) de séparation air-huile baisse, respectivement monte ;
- par suite, le restricteur (7) descend, respectivement monte ;
- la section de passage (2) disponible pour l'évacuation d'air augmente, respectivement diminue, favorisant la diminution, respectivement l'augmentation, de pression d'air dans la cuve (1) ;
- les pressions d'air et d'huile pure dans la cuve reviennent à l'équilibre, la surface libre (5) de séparation air-huile remontant, respectivement descendant.

6. Procédé de séparation d'un mélange air-huile récolté par au moins une pompe de récupération dans un circuit de lubrification d'un moteur, l'air obtenu ainsi par séparation étant rejeté à l'atmosphère, mettant en oeuvre un désaérateur statique selon l'une quelconque des revendications 1 à 4, ledit désaérateur comprenant une cuve (1), de préférence cylindrique, reliée au niveau de sa partie supérieure à une conduite (2) d'évacuation dudit air à l'atmosphère et tangentiellement au niveau de sa paroi latérale à une conduite (3) d'arrivée dudit mélange air-huile et à une conduite (4) d'évacuation d'huile pure obtenue par séparation, un flotteur (6) disposé à la surface de séparation air-huile (5) et relié à un restricteur (7) variable du côté de la sortie d'air (2), **caractérisé par** les étapes suivantes, en cas de débit variable d'huile pure récoltée et de débit constant d'air :
- la pression de sortie d'huile pure augmentant, respectivement diminuant, dans la cuve (1), le niveau de la surface libre (5) de séparation air-huile monte, respectivement baisse ;
- par suite, le restricteur (7) monte, respectivement descend ;
- la section de passage (2) disponible pour l'évacuation d'air diminue, respectivement augmente, favorisant l'augmentation, respectivement la diminution, de pression d'air dans la cuve (1) ;
- les pressions d'air et d'huile pure dans la cuve reviennent à l'équilibre, la surface libre (5) de séparation air-huile redescendant, respectivement remontant.

7. Utilisation d'un désaérateur statique, selon l'une quelconque des revendications 1 à 4, pour la séparation d'un mélange air-huile en récupération par pompe dans des circuits de lubrification de turbomachines ou de moteurs thermiques à carter sec.

## Revendications modifiées

### Revendications modifiées conformément à la règle 86(2) CBE.

**1.** Désaérateur statique pour la séparation d'un mélange gaz-liquide, en particulier air-huile, dans lequel le gaz obtenu ainsi par séparation est rejeté à l'atmosphère, comprenant une cuve (1), de préférence cylindrique, reliée au niveau de sa partie supérieure à une conduite (2) d'évacuation dudit gaz à l'atmosphère et tangentiellement au niveau de sa paroi latérale à une conduite (3) d'arrivée dudit mélange gaz-liquide et à une conduite (4) d'évacuation de liquide pur obtenu par séparation, **caractérisé en ce que** :
- le désaérateur comprend en outre un flotteur (6) disposé à la surface de séparation gaz-liquide (5) et porté par le liquide, ledit flotteur étant relié à un restricteur (7) variable du côté de la sortie de gaz (2) ;
- le restricteur (7) comprend un pointeau en obturation totale ou partielle de la conduite d'évacuation de gaz (2) et
- la conduite d'arrivée du mélange gaz-liquide (3) est connectée tangentiellement à la cuve (1) dans sa partie latérale supérieure (respectivement inférieure) et la conduite d'évacuation de liquide pur (4) après séparation est connectée à la cuve (1) dans sa partie latérale inférieure (respectivement supérieure).

**2.** Procédé de séparation d'un mélange air-huile récolté par au moins une pompe de récupération dans un circuit de lubrification d'un moteur, l'air obtenu ainsi par séparation étant rejeté à l'atmosphère, mettant en oeuvre un désaérateur statique selon la revendication 1, ledit désaérateur comprenant une cuve (1), de préférence cylindrique, reliée au niveau de sa partie supérieure à une conduite (2) d'évacuation dudit air à l'atmosphère et tangentiellement au niveau de sa paroi latérale à une conduite (3) d'arrivée dudit mélange air-huile et à une conduite (4) d'évacuation d'huile pure obtenue par séparation, un flotteur (6) disposé à la surface de séparation air-huile (5) et relié à un restricteur (7) variable du côté de la sortie d'air (2), **caractérisé par** les étapes suivantes, en cas de débit constant d'huile pure récoltée et de débit variable d'air :
- la pression de l'air augmentant, respectivement diminuant, dans la cuve (1), en amont du restricteur (7), le niveau de la surface libre (5) de séparation air-huile baisse, respectivement monte ;
- par suite, le restricteur (7) descend, respectivement monte ;
- la section de passage (2) disponible pour l'évacuation d'air augmente, respectivement diminue, favorisant la diminution, respectivement l'augmentation, de pression d'air dans la cuve (1) ;
- les pressions d'air et d'huile pure dans la cuve reviennent à l'équilibre, la surface libre (5) de séparation air-huile remontant, respectivement descendant.

**3.** Procédé de séparation d'un mélange air-huile récolté par au moins une pompe de récupération dans un circuit de lubrification d'un moteur, l'air obtenu ainsi par séparation étant rejeté à l'atmosphère, mettant en oeuvre un désaérateur statique selon la revendication 1, ledit désaérateur comprenant une cuve (1), de préférence cylindrique, reliée au niveau de sa partie supérieure à une conduite (2) d'évacuation dudit air à l'atmosphère et tangentiellement au niveau de sa paroi latérale à une conduite (3) d'arrivée dudit mélange air-huile et à une conduite (4) d'évacuation d'huile pure obtenue par séparation, un flotteur (6) disposé à la surface de séparation air-huile (5) et relié à un restricteur (7) variable du côté de la sortie d'air (2), **caractérisé par** les étapes suivantes, en cas de débit variable d'huile pure récoltée et de débit constant d'air :
- la pression de sortie d'huile pure augmentant, respectivement diminuant, dans la cuve (1), le niveau de la surface libre (5) de séparation air-huile monte, respectivement baisse ;
- par suite, le restricteur (7) monte, respectivement descend ;
- la section de passage (2) disponible pour l'évacuation d'air diminue, respectivement augmente, favorisant l'augmentation, respectivement la diminution, de pression d'air dans la cuve (1) ;
- les pressions d'air et d'huile pure dans la cuve reviennent à l'équilibre, la surface libre (5) de séparation air-huile redescendant, respectivement remontant.

**4.** Utilisation d'un désaérateur statique, selon la revendication 1, pour la séparation d'un mélange air-huile en récupération par pompe dans des circuits de lubrification de turbomachines ou de moteurs thermiques à carter sec.
